# EUROPÄISCHE PATENTSCHRIFT

(11) **EP 0 837 985 B1**
(45) Veröffentlichungstag und Bekanntmachung des Hinweises auf die Patenterteilung: **13.12.2000**
(21) Anmeldenummer: 96916049.8
(22) Anmeldetag: 11.05.1996
(51) Int. Cl.: F02M 25/06, F01M 13/02, F16K 49/00

(54) **HEIZEINRICHTUNG**
HEATING ARRANGEMENT
DISPOSITIF DE CHAUFFAGE

(30) Priorität: 13.07.1995 DE 19525542
(43) Veröffentlichungstag der Anmeldung: 29.04.1998
(73) Patentinhaber: FILTERWERK MANN & HUMMEL GmbH, 71631 Ludwigsburg (DE)
(72) Erfinder: BUTZ, Thomas, D-70825 Korntal-Münchingen (DE); HOLCH, Hans-Werner, D-74081 Heilbronn (DE); MÜLLER, Heinz, D-71686 Remseck (DE)
(74) Vertreter: Voth, Gerhard, Dipl.-Ing.
(86) Internationale Anmeldenummer: EP9602033
(87) Internationale Veröffentlichungsnummer: WO9703285

(56) Entgegenhaltungen:
- EP-A- 0 351 521
- EP-A- 0 471 142
- DE-A- 2 249 802
- DE-C- 495 867
- FR-A- 2 013 859
- GB-A- 535 438
- GB-A- 2 158 152
- GB-A- 2 158 153
- US-A- 3 594 020
- US-A- 3 733 459
- US-A- 5 499 604

## Beschreibung

Die Erfindung betrifft eine Heizeinrichtung zur Erwärmung von Gasen.

Aus der DE-AS 23 43 185 ist eine Vorrichtung bekannt bei dem im Ansaugsystem einer Brennkraftmaschine mittels heißer Abgase Kraftstoff verdampft wird. Hierzu ist im Saugrohr ein Wärmetauscher angeordnet, der mit porösen, von einem Kraftstoffluftgemisch durchströmten Elementen ausgestattet ist. Durch diesen Wärmetauscher wird ein Teil der Abgase geführt. Ein Nachteil solcher Einrichtungen besteht darin, daß ein zusätzliches Element, nämlich das Wärmetauscherelement erforderlich ist, welches dazu führt, daß der Durchtrittsquerschnitt sehr stark verringert wird. Damit erhöht sich zwangsläufig der Durchflußwiederstand. Es sind auch andere Elemente zum Verändern der Temperatur von Gasen bekannt. Beispielsweise zeigt die DE 20 42 907 ein Rohr, welches innerhalb der Wandung eine Rohrschlange aufweist in welcher ein temperaturveränderndes Mittel eingeführt wird. Dieser Aufbau ist jedoch sehr aufwendig und führt nur im Wandbereich zu einer Temperaturveränderung des durchfließenden Mediums.

Aus der US 3 733 459 ist ein elektrisches Heizelement für Ventile bekannt. Dieses Heizelement muss je nach Bedarf aktiviert werden, hierzu sind entsprechende Sensoren erforderlich. Außerdem ist eine Regelung der Temperatur zweckmäßig um eine Überhitzung des zu heizenden Systems zu vermeiden.

Der Erfindung liegt die Aufgabe zugrunde, die genannten Nachteile zu vermeiden und eine Heizeinrichtung zur Erwärmung-von Gasen zu schaffen, die den Strömungswiderstand nicht verringert und mit einfachen Mitteln herstellbar ist.

Diese Aufgabe wird durch das Kennzeichen des Hauptanspruchs gelöst.

Der wesentliche Vorteil der Erfindung liegt darin, daß nicht ein zusätzliches Heizelement, wie z.B. ein Heizgitter erforderlich ist, sondern daß ein Element, das sich im Strömungskanal befindet, dazu genutzt wird, die Wärmeenergie zu übertragen. Dieses Element ist in einer vorteilhaften Weiterbildung der Erfindung ein Ventil, welches wenigstens eine metallische Ventilplatte aufweist. An dieser metallischen Platte ist ein Kaltleiter. Die Wärmeübertragung auf der metallischen Platte sorgt für ein gleichmäßiges Erwärmen der Umgebung bzw. der hindurchströmenden Gase.

Die Heizeinrichtung dient zur Verhinderung des Einfrierens von Leitungen durch welche die Kurbelgehäusegase eines Motors zugeführt werden. Insbesondere nach einem Kaltstart des Motors und bei kalter, feuchter Umgebungsluft kann die Leitung, durch welche die Kurbelgehäusegase dem Reinluftbereich eines Luftfilters zugeführt werden, vereisen. Dieses Vereisen wird durch das Erwärmen mittels des Kaltleiters wirksam vermieden.

Gemäß einer Ausgestaltung der Erfindung wird das Ventil, welches zur Unterdruckregulierung vorgesehen ist, angewendet. Ein solches Ventil ist am Eintritt der Leitung für die Kurbelgehäusegase in den Reinluftbereich des Luftfilters angeordnet und hat die Aufgabe, in Betriebszuständen, in welchen nur ein sehr geringer Unterdruck im Reinluftbereich des Luftfilters herrscht, für einen ausreichend großen Unterdruck im Kurbelgehäuse zu sorgen. Selbstverständlich besteht auch die Möglichkeit, ein Druckbegrenzungsventil welches einen sehr hohen Ansaugdruck im Reinluftbereich des Luftfilters auf einen Maximalwert begrenzt, mit einer metallischen Ventilplatte auszurüsten und diese mit dem Heizelement zu versehen.

Eine Weiterbildung der Erfindung sieht vor, die Ventilteile mit einem Kunststoffkörper zu umspritzen. Dies hat den Vorteil, daß die Ventilteile beispielsweise lediglich miteinander verrastet oder verschnappt werden und das Kunststoffteil die endgültige Form des Ventils bildet. Damit verringert sich der Montageaufwand, außerdem ist eine zuverlässige Abdichtung gewährleistet.

Diese und weitere Merkmale von bevorzugten Weiterbildungen der Erfindung gehen außer aus den Ansprüchen auch aus der Beschreibung und den Zeichnungen hervor.

Ausführungsbeispiele der Erfindung sind in den Zeichnungen dargestellt und werden im folgenden näher erläutert. Die Zeichnungen zeigen:
- Figur 1: ein Ventil mit einer Heizeinrichtung,
- Figur 2: das Ventil in Draufsicht,

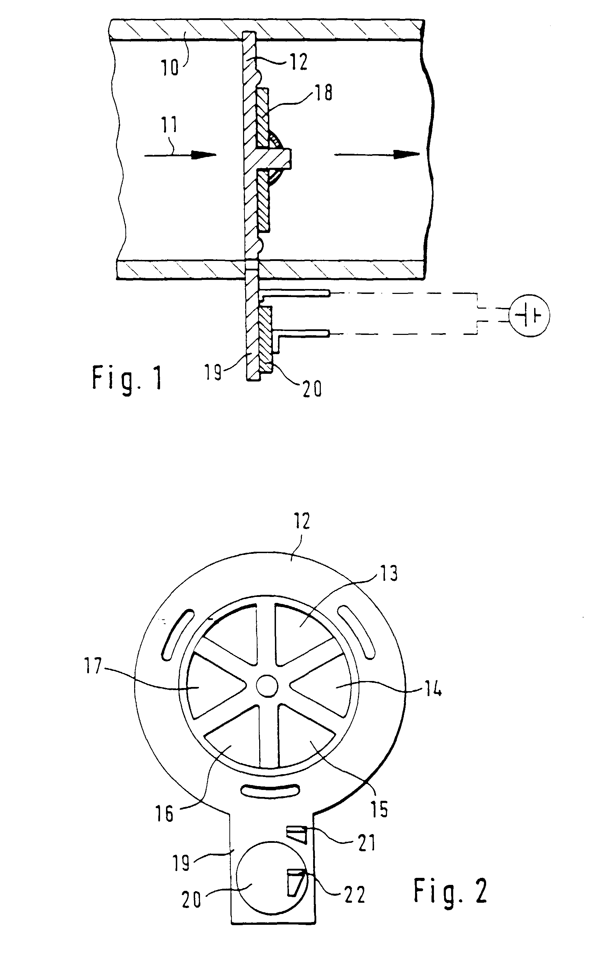

Die Schnittdarstellung gemäß Figur 1 zeigt ein einfaches Plattenventil, welches in einem Rohr 10 angeordnet ist. Durch dieses Rohr strömen die Kurbelgehäusegase gemäß Pfeil 11 in den Reinluftbereich eines Luftfilters. Das Ventil besteht aus einer Kupferplatte 12, welche wie in Figur 2 dargestellt, mit Durchbrüchen 13, 14, 15, 16, 17 versehen ist. Auf der Kupferplatte befindet sich eine elastische Ventilplatte 18. Diese ist in Figur 2 zur besseren Darstellung der Durchbrüche nicht gezeigt. Die Kupferplatte 12 ist mit einer Fahne 19 versehen. Auf dieser Fahne 19 befindet sich ein Kaltleiterelement 20. Auf dem Kaltleiterelement 20 und auf der Kupferplatte 12 ist jeweils ein Steckkontakt 21, 22 angeordnet. Über diese Steckkontakte wird eine Spannung eingespeist. Sobald die Temperatur der Kupferplatte und damit auch des mit der Kupferplatte verbundenen Kaltleiters unter einen bestimmten Bezugspunkt fällt, fließt ein Heizstrom der die Platte erwärmt. Dies hat den Vorteil, daß zusätzliche Regeleinrichtungen nicht erforderlich sind.

## Patentansprüche

1. Heizeinrichtung zur Verhinderung des Einfrierens oder Vereisens von Leitungen zur Zuführung von Kurbelgehäusegase aus dem Kurbelgehäuse einer Brennkraftmaschine in dem Ansaugbereich, wobei ein Element zum Erwärmen der Kurbelgehäusegase vorgesehen ist, wobei das Element ein Ventil (18) ist, welches mindestens eine metallische Platte (12) aufweist, dadurch gekennzeichnet, daß an dieser metallischen Platte (12) ein Kaltleiter (20) vorgesehen ist.

2. Heizeinrichtung nach Anspruch 1, dadurch gekennzeichnet, daß das Ventil (12, 18) ein Druckregelventil ist.

3. Heizeinrichtun nach Anspruch 1, dadurch gekennzeichnet, daß das Ventil ein Durchflußbegrenzungsventil ist.

4. Heizeinrichtung nach einem der vorherigen Ansprüche, dadurch gekennzeichnet, daß die Ventilteile mit einem Kunststoffkörper umspritzt sind.

5. Heizeinrichtung nach Anspruch 4, dadurch gekennzeichnet, daß die Ventilteile miteinander verschnappt oder verrastet sind und Kavitäten aufweisen, die eine Verzahnung des Kunststoffteils ermöglichen.

## Claims

1. Heating arrangement for preventing the freezing or icing-up of pipes for supplying crankcase gases from the crankcase of an internal combustion engine to the intake region, a device for heating the crankcase gases being provided, the device being a valve (18) which includes at least one metallic plate (12), characterised in that a PTC thermistor (20) is provided on this metallic plate (12).

2. Heating arrangement according to claim 1, characterised in that the valve (12, 18) is a pressure regulating valve.

3. Heating arrangement according to claim 1, characterised in that the valve is a throughflow limiting valve.

4. Heating arrangement according to one of the previous claims, characterised in that the valve parts have a plastics material body injection-moulded therearound.

5. Heating arrangement according to claim 4, characterised in that the valve parts are snap-connected or fitted together and include cavities which permit the plastics material part to be serrated.

## Revendications

1. Dispositif de chauffage pour éviter le gel ou le givrage de conduites de réinjection des gaz d'un carter de vilebrequin d'un moteur à combustion interne vers la zone d'aspiration du moteur, avec un élément pour chauffer les gaz du carter de vilebrequin, l'élément étant une soupape (18) ayant au moins une plaque métallique (12),
caractérisé en ce que
cette plaque métallique (12) comporte un conducteur froid (20).

2. Dispositif selon la revendication 1,
caractérisé en ce que
la soupape (12, 18) est une soupape de régulation de pression.

3. Dispositif selon la revendication 1,
caractérisé en ce que
la soupape est une soupape de limitation de débit.

4. Dispositif selon l'une quelconque des revendications précédentes,
caractérisé en ce que
les parties de la soupape sont enrobées d'un corps en matière plastique surmoulé.

5. Dispositif selon la revendication 4,
caractérisé en ce que
les parties de soupape sont enclipsées ou accrochées les unes aux autres et comportent des cavités permettant l'accrochage par contre-dépouille de la partie en matière plastique.
